# EUROPÄISCHE PATENTSCHRIFT

(11) **EP 1 532 794 B1**
(45) Veröffentlichungstag und Bekanntmachung des Hinweises auf die Patenterteilung: **30.12.2015**
(21) Anmeldenummer: 03790612.0
(22) Anmeldetag: 22.08.2003
(51) Int. Cl.: H04L 29/06

(54) **SYSTEM ZUM VERWALTEN UND AUSGEBEN VON AUDIO-DATEN**
SYSTEM FOR MANAGING AND OUTPUTTING AUDIO DATA
SYSTEME DE GESTION ET DE PRODUCTION DE DONNEES AUDIO

(30) Priorität: 27.08.2002 CH 146202
(43) Veröffentlichungstag der Anmeldung: 25.05.2005
(73) Patentinhaber: Barix AG, 8008 Zürich (CH)
(72) Erfinder: RIETSCHEL, Johannes, CH-8044 Zürich (CH)
(74) Vertreter: Bremi, Tobias Hans
(86) Internationale Anmeldenummer: PCT/CH2003/000567
(87) Internationale Veröffentlichungsnummer: WO 2004/021662

(56) Entgegenhaltungen:
- WO-A-01/89178
- WO-A-99/34579
- US-B1- 6 173 322
- NCH SWIFT SOUND: "IMS Telephone On Hold Music and Messages Player" INTERNET, [Online] 23. Oktober 2001 (2001-10-23), Seiten 1-4, XP002227617 Gefunden im Internet: <URL:http://web.archive.org/web/2001102303 0034/http://www.nch.com.au/ims/> [gefunden am 2003-01-17]

## Beschreibung

### TECHNISCHES GEBIET

Die vorliegende Erfindung betrifft ein System, das wenigstens einen Content Server, wenigstens ein Endgerät, sowie wenigstens ein Netzwerk, über welches der Content Server und das oder die Mehrzahl von Endgeräten über die jeweiligen Netzwerk-Interfaces in datenmässiger Verbindung stehen umfasst.

### STAND DER TECHNIK

Durch den praktisch überall verfügbaren, recht zuverlässigen und schnellen Anschluss an Finnennetze oder das Internet via Standleitungen sowie die mögliche Komprimierung von Daten dank hocheffektiven Verfahren wie MP3, WMA, AAC etc ist die digitale Übertragung von Audioclips oder sogar stundenlangen Audioinhalten praktisch problemlos möglich geworden. Stand der Technik ist das "online"-Streaming von Internet-Radios, das "Herunterladen" und Speichern von Musikdateien per Pay-Service, Tauschbörse etc, sowie die Wiedergabe dieses heruntergeladenen "Content" auf dem PC, über Audioausgänge an Stereoanlagen, sowie das Brennen von CDs.

In diesem weitesten Zusammenhang beschreibt z. B. die US 6,385,596 sicheres (secure) Streaming, d. h. es geht in dieser Schrift darum, wie Audio-Daten bei ihrer Übertragung vor dem Zugriff Dritter abgesichert werden können.

Die WO 02/17099 beschreibt im wesentlichen wireless Audio-streaming, d. h. das Streaming von Audio-Dateien über kabellose (Telefon-) Netzwerke. Der wesentliche Gedanken bei dieser Schrift besteht darin, einen lokalen Server am Netz vorzusehen, welcher die Audio-Dateien dann zu den drahtlosen Telefonen (umgesetzt) streamt.

Bei der US 2002/0013852 handelt es sich um eine Schrift, bei welcher Musik über das WWW eingespielt wird, von dort zunächst auf einen Server und von diesem Server anschliessend über ein LAN an die entsprechenden Endgeräte gespielt wird. Dabei wird ein Portal auf dem web vorgesehen, auf welchem man Content für "streaming" auswählt, und dann diese Streams, über Breitbandverbindung, auf den PC kommen, wo sie zwischengepuffert und dann schnell über Ethernet oder Wireless-Netzwerke an Geräte weitergegeben werden. Wichtiger Punkt dieser Schrift ist, dass die Speicher- und Verarbeitungskapazität eines lokalen PCs benutzt wird, um das Endgerät klein und einfach zu halten.

Aus der WO 99/34579 ist ein on-hold-Device bekannt, welches in digitaler Weise Audio-Inhalte speichern kann, und welches optional mit einem Ausgabegerät für diese Audio-Inhalte verbunden sein kann. Dabei gibt es zusätzlich ein programmierbares Bauteil, über welches Ausgabeinstruktionen des Device programmiert und ausgeführt werden können.

### DARSTELLUNG DER ERFINDUNG

Der Erfindung liegt demnach die Aufgabe zugrunde, ein System zur Verfügung zu stellen, welches in kostengünstiger, zuverlässiger sowie leicht überwachbarer und installierbarer Weise die gezielte und selektive Ausgabe von Audio-Dateien von einem Content Server auf Endgeräte erlaubt. Dabei handelt es sich um ein System umfassend wenigstens einen Content Server mit wenigstens einem Prozessor, Mitteln zur Datenspeicherung sowie mit wenigstens einem Netzwerk-Interface, weiterhin umfassend wenigstens ein Endgerät mit wenigstens einem Prozessor, internen Mitteln zur Datenspeicherung sowie wenigstens einem Netzwerk-Interface, sowie umfassend ein Netzwerk, über welches der wenigstens eine Content Server und das wenigstens eine Endgerät über die jeweiligen Netzwerk-Interfaces in datenmässiger Verbindung stehen.

Die Lösung dieser Aufgabe wird dadurch erreicht, dass auf dem Content Server ein Management-Datenverarbeitungsprogramm vorhanden ist, welches spezifischen Endgeräten spezifische Audio-Dateien bereitstellt, wobei wenigstens ein Endgerät über einen Medienausgang zur Ausgabe von Audio-Dateien verfügt, und dass das wenigstens eine Endgerät periodisch und selbstständig auf dem Content Server die spezifisch für das Endgerät bereitgestellten Audio-Dateien über ein TCP/IP Protokoll abholt respektive aktualisiert und entsprechend einem im Endgerät gespeicherten Regie-Protokoll welches im Endgerät die Ausgabe respektive Wiedergabe der Audiodateien in Bezug auf Ablauf und/oder Zeit steuert, über den Medienausgang ausgibt. Dabei holen die Endgeräte ausserdem periodisch und selbstständig auf dem Content Server spezifisch für das jeweilige Endgerät bereitgestellte Regie-Protokolle und die aktuelle Zeit ab respektive aktualisieren diese.

Der Kern der Erfindung besteht somit darin, dass ein Content Server vorgesehen wird, welcher die Ausgabe auf den Endgeräten kontrolliert. Dies erfolgt nun aber nicht so, dass der Content Server aktiv die Endgeräte steuert indem er die Endgeräte über Datenpakete ansteuert, sondern in umgekehrter Weise, d. h. indem die Endgeräte periodisch und selbstständig den Content Server konsultieren und sich die für sie relevanten Informationen abholen. Auf diese Weise werden Installation und Verwaltung wesentlich vereinfacht, da beispielsweise bei Anbindung eines Endgeräts in einem LAN und bei Verwendung eines Content Servers auf dem WWW die Anwesenheit einer Firewall unproblematisch ist. Der Content Server stellt unter Zuhilfenahme der darauf vorhandenen Management-Datenverarbeitungsprogramme jeweils für ein spezifisches Endgerät spezifische Audio-Dateien nur bereit, ohne sie aktiv selbsttätig an die Endgeräte zu verschicken. Kollisionen mit ggf. vorhandenen Firewalls können so verhindert werden. Die intelligenten Endgeräte holen sich die auf dem Content Server bereitgestellten Dateien periodisch ab respektive überprüfen ggf. nur, ob der auf dem Content Server bereitgestellte Inhalt überhaupt geändert hat. Die Audio-Dateien werden auf dem Endgerät zwischengespeichert und einem Regie-Protokoll entsprechend von diesem Endgerät auf einem eigens dafür vorgesehenen Medienausgang ausgegeben. Im Gegensatz zum klassischen Streaming kann so im Fall von sich wiederholenden Audio-Dateien eine permanent hohe Netzlast vermieden werden (Audio Dateien werden idealerweise nur einmal heruntergeladen). Ausserdem kann verhindert werden, dass bei hoher Netzlast Unterbrüche bei den abgespielten Audio-Dateien hörbar sind. Grundsätzlich kann es sich beim verwendeten Netzwerk um ein routingfähiges Netzwerk beliebiger Struktur und auch ggf. segmentweise gemischter beliebiger Technologie (Kabel, wireless, optisch) handeln, wobei das Endgerät und der Content Server entweder direkt oder über ein handelsübliches Interface/Umsetzer an dieses Netzwerk angeschlossen sind. Insbesondere kann der Einsatz einer Dialup Verbindung interessant sein, bevorzugt realisiert mit im Endgerät integriertem Modem, wenn kein lokales Netzwerk verfügbar ist.

Für jedes spezifische Endgerät können bei der vorgeschlagenen Methode respektive beim vorgeschlagenen System auf dem Content Server spezifische Audio-Dateien zusammengestellt werden und der Zugriff von den Endgeräten auf den Content Server konfiguriert werden. Die Geschwindigkeit der periodischen Abfragen der Endgeräte kann dabei den Bedürfnissen und der Anwendung entsprechend eingestellt werden. Für Anwendungen im Bereich der Telefonwartemusik wird typisch eine Überprüfung auf neuen Inhalt beispielsweise alle 24 Stunden reichen. Für Anwendungen, in denen aktuelle Nachrichten oder Informationen ausgegeben werden sollen (Wetterwarnungen, Nachrichten etc), oder bei Anwendungen, bei welchen die Überprüfung des Systemzustandes minutenaktuell sein soll, ist unter Umständen eine Rückfrage des Endgerätes alle 30 Sekunden sinnvoll.

Die von den Endgeräten abgeholten Dateien können in durch Regie-Protokolle kontrollierter Weise entweder kontinuierlich oder einmalig über den Medienausgang ausgegeben werden. Bei kontinuierlicher Ausgabe kann es sich insbesondere bevorzugt um nach einem bestimmten, im Regie-Protokoll festgelegten, repetitiven Schema verlaufendes Abspielen einzelner Dateien handeln.

Der Netzwerkanschluss kann über Modem (Festleitung oder Dialup) realisiert werden, und insbesondere ist es möglich, das Endgerät so zu konfigurieren, dass es zum Aufbau der Netzwerkverbindung selbstständig einen Point of Presence(POP) via Modem anwählt.

Gemäss einer ersten bevorzugten Ausführungsform der vorliegenden Erfindung findet die Übertragung der Daten via HTTP, FTP, SSL, TLS, oder SMTP-Protokolle statt. Die Verwendung dieser Standard-Protokolle erlaubt ein äusserst einfaches Aufsetzen des Content Server, und beispielsweise die Verwendung von SSL kann die unter Umständen im Zusammenhang mit Urheberrechten relevante Sicherheit der Datenübertragung gewährleisten.

Da häufig Daten zwischen einem lokalen Netzwerk und einem Content Server nur vermittels zwischengeschalteter Server oder allgemein zwischengeschalteter Geräte ausgetauscht werden können, und da diese zwischengeschalteten Geräte häufig z.B. Authentifizierungen oder eine Anmeldung erforderlich machen, ist in diesen Situationen die einfache Kommunikation zwischen Content Server und im lokalen Netz angeordnetem Endgerät nicht möglich. Entsprechend erweist es sich dann als vorteilhaft, die automatisierte Möglichkeit vorzusehen, diese Authentifizierung oder Anmeldung bei diesem zwischengeschalteten Gerät zu erlauben. Findet beispielsweise die Übertragung der Daten via http statt, so sind entsprechend Protokolle zur Kommunikation mit Proxy Servern resp. zur Übermittlung von Daten über Proxy Server von und zum Content Server zu unterstützen respektive zu konfigurieren. Derartige Protokolle erlauben anschliessend nach vorgängiger Konfiguration eine automatisierte Eingabe beispielsweise einer *userid* und eines *Passworts,* damit das Endgerät sich nach Anmeldung respektive Authentifizierung beim Server selbstständig die entsprechenden Daten vom Content Server abholen kann. Die Konfiguration muss dabei nicht unbedingt über entsprechende Eingabegeräte am Endgerät vorgenommen werden, sondern kann bevorzugt bei sehr einfach gestalteten Endgeräten beispielsweise über ein zweites im lokalen Netzwerk angeordnetes Gerät (normaler Netzcomputer) beispielsweise über ein Browser-Interface vorgenommen werden.

Die in einem derartigen System verwendeten Endgeräte verfügen vorzugsweise als Medienausgang über einen Lautsprecher, und/oder einen Standard (Chinch) Audioausgang, und/oder ein Telefoninterface und/oder eine Kopfhörerbuchse. Mit anderen Worten handelt es sich vorzugsweise um dedizierte Geräte, welche spezifisch nur zur Ausgabe von Audio-Dateien vorgesehen sind. Idealerweise werden die Endgeräte so ausgelegt, dass diese sich über eine automatische Vergabe einer IP-Adresse (z. B. DHCP oder andere, vom Endgerät ausgehende autonome Verfahren) beim Anschliessen automatisch selbstständig konfigurieren und einen ersten Kontakt zu einem Content Server herstellen. Werden beispielsweise in den Endgeräten spezifische Content Server-Adressen bereits bei der Herstellung hinterlegt (z.B. im RAM, EEPROM oder im ROM) und bei der ersten Kontaktaufnahme mit einem derartigen Content Server auch gleich die Seriennummer des Endgerätes (zusammen mit der zugeordneten IP-Adresse) an den Content Server übergeben, so kann ohne weitere Einflussnahme der installierenden Person nach einem einfachen Anschluss an das Netzwerk und ggf. an eine Stromversorgung (sofern nicht Systeme wie z. B. POE, Power over Ethernet Anwendung finden) direkt und unmittelbar Audio-Inhalt, welcher auf dem Content Server bereitliegt, heruntergeladen und anschliessend abgespielt werden (Plug and Play im wahrsten Sinne des Wortes). Eine Ausführungsmöglichkeit besteht auch darin, Standard-Audioinhalt schon werksmässig in den nichtflüchtigen Speicher des Gerätes einzuspeichern, wodurch das Gerät bei der Installation selbst ohne Netzwerkverbindung Audio-Inhalt abspielen kann.

Werden beispielsweise von einem entsprechenden Provider derartige Audio-Dienstleistungen angeboten, so können dem Kunden entsprechende Audio-Dateien bereits bei Aufnahme der Bestellung in den Kundenwünschen angepasster Weise auf dem Content Server hinterlegt werden (z. B. ein bestimmter Typ von Hintergrundmusik mit periodisch wiederkehrenden Durchsagen), wobei bereits die Seriennummern der an diesen Kunden ausgelieferten Endgeräte mit den so hinterlegten Audio-Dateien verknüpft werden. Anschliessend müssen nur noch die Endgeräte mit den korrespondierenden Seriennummern an den Kunden ausgeliefert werden und dieser schliesst diese Endgeräte durch einfaches Verbinden mit dem Netzkabel (z. B. LAN) respektive einer Stromquelle an, um anschliessend automatisch und ohne weitere Konfiguration die auf dem Content Server bereitgestellten Audio-Dateien ausgegeben zu erhalten.

Alternativ oder zusätzlich ist es, wie weiterhin bevorzugt, möglich, das Endgerät über einen oder mehrere Anschlüsse zur Anbindung von lokalen Telefonen und/oder einer lokalen Telefonanlage verfügen zu lassen. Bei Vorhandensein eines derartigen telefonischen Anschlusses sollte dabei gleichzeitig zusätzlich wenigstens ein Interface zum Anschluss der externen Telefonleitung vorhanden sein. So kann das Endgerät gewissermassen als über den Content Server steuerbare respektive konfigurierbare Telefonzentrale ebenfalls durch einfaches Anschliessen installiert werden. Auf dem Content Server werden entsprechend beispielsweise typische, für den Kunden spezifische Warteschleifentexte hinterlegt werden. Die Verwaltung von derartigen Warteschleifentexten kann so sehr einfach gestaltet werden, da es beispielsweise möglich ist, diese Texte respektive entsprechende Melodien up-to-date zu halten (vom Kunden eingekauft wird z. B. die Dienstleistung, in der Warteschleife stets aktuelle Musik zu haben, ohne sich darum krümmern zu müssen), und es ist zusätzlich sehr einfach möglich, spezifische Texte in Abhängigkeit der Tageszeit oder bei Feiertagen vorzusehen. Entsprechend wird in einer derartigen Situation das Endgerät dazu ausgelegt, über die externe Telefonleitung eingehende Anrufe in eine insbesondere bevorzugt in Abhängigkeit des Zustands der lokalen Telefonanlage respektive der lokalen Telefone (z. B. alle Leitungen einer bestimmten Abteilung belegt) und/oder in Abhängigkeit einer gezielten Eingabe (z. B. am Samstag werden keine Telefone angenommen) gestaltete Warteschleife eintreten zu lassen, und dabei wenigstens eine Audio-Datei entsprechend einem Regie-Protokoll in ggf. interaktiver Weise abzuspielen.

Vorzugsweise steuert das Regie-Protokoll im Endgerät die Ausgabe respektive Wiedergabe der Audiodateien in Bezug auf Ablauf und/oder Zeit. Insbesondere bevorzugt wird dabei so vorgegangen, dass die Endgeräte ausserdem periodisch und selbstständig auf dem Content Server spezifisch für das jeweilige Endgerät bereitgestellte Regie-Protokolle und/oder die aktuelle Zeit abholen respektive aktualisieren. Die Regie-Protokolle können dabei unter anderem auch Anweisungen enthalten, wie häufig das Endgerät beim Content Server die Aktualität der Dateien nachfragen soll (Abfragefrequenz). Auch andere Dateien wie z. B. Upgrades der Software auf den Endgeräten etc. können so zum Abholen durch die Endgeräte auf dem Content Server bereitgestellt werden.

Eine weitere Nutzungsmöglichkeit des Content Servers ergibt sich auch für den Dienstleistungsbereich, insbesondere wenn Geräte vermietet werden: Wenn das Gerät über eine bestimmte Zeitspanne mit dem Content Server keinen Kontakt mehr bekommt oder dieser dem Gerät (z.B. wegen Nichtbezahlung des Services) ein Sperrsignal gibt, schaltet das Gerät den Audioausgang ab oder auf ein bestimmtes File (z.B. "Gerät gesperrt"), und die Entsperrung kann vom Dienstleister per Content Server jederzeit wieder vorgenommen werden.

Zur Überwachung des Zustands der Endgeräte kann es sich als vorteilhaft erweisen, die Endgeräte jeweils nach komplettem Herunterladen von Audio-Dateien respektive von Regie-Protokollen eine Signatur, Version oder Prüfsumme als Bestätigung an den Content Server übertragen zu lassen. Entsprechend werden dann beispielsweise die von den Endgeräten erfolgten respektive übermittelten Zugriffe und/oder Transaktionen und/oder Signaturen und/oder Versionen und/oder Prüfsummen auf dem Content Server im Management-Datenverarbeitungsprogramm aufgezeichnet, und auf dem Content Server der Systemzustand des Gesamtsystems oder einzelner Endgeräte insbesondere bevorzugt unter Verwendung eines Web-Browsers abgefragt.

Ein wesentlicher Vorteil des vorgeschlagenen Systems besteht ausserdem in der Möglichkeit, die Anfragen der Endgeräte beim Content Server durch Vergabe von gestaffelten Anfragezeiten (im für das jeweilige Endgerät bereitgestellte Regie-Protokoll festgelegt) optimal zu verteilen, um die verfügbare Bandbreite stets ideal auszunützen. Vorzugsweise werden entsprechend die Anfragen bei gleichartigen Endgeräten im wesentlichen gleichmässig verteilt.

Ganz besonders einfach gestaltet sich ein derartiges System, wenn die einzelnen Endgeräte und/oder der Content Server über einen Web-Browser konfiguriert und in Bezug auf deren Status überprüft werden können. Ein Kunde, der z. B. eine bestimmte Musik-Dienstleistung eingekauft hat, kann so über einen Web-Browser nach Einloggen die entsprechende Auswahl auf den Content Server interaktiv modifizieren. Er kann zum Beispiel einzelne Blöcke häufiger auftreten lassen (z. B. Werbeelemente oder spezifische Durchsagen) oder kann zwischen unterschiedlichen Musikrichtungen auswählen, sofern dies in seinem Dienstleistungsvertrag so definiert ist. Insbesondere, wenn die Endgeräte zur Einspielung von Warteschleifenmusik verwendet werden, kann es absolut notwendig sein, dass der Kunde die entsprechenden Audio-Dateien seinen Bedürfnissen entsprechend auch kurzfristig modifizieren kann. Die vorgeschlagene Konfiguration über einen Web-Browser erlaubt es in äusserst einfacher Weise, z. B. bei einer unvorhergesehen erforderlichen Änderung der Warteschleife, diese einfach selber vorzunehmen. Es kann ggf. in analoger Weise in einem derartigen System auch über eine Standard-E-Mail an den Content Server beispielsweise das Umschalten von besetzter Telefonzentrale zu den besetzter Telefonzentrale ausgelöst werden (SMTP-Protokoll).

Ein derartiges System eignet sich unter anderem aber auch für die spezifische Ausgabe von Nachrichten beispielsweise in öffentlichen Gebäuden etc. Dabei verfügen die Endgeräte zusätzlich über wenigstens eine lokale Schnittstelle (z. B. Auslöseknopf), über welche die Ausgabe von bestimmten Audio-Dateien oder Kombinationen von Audio-Dateien, insbesondere in Form von Nachrichten und/oder Musik-Dateien, ausgelöst werden kann. Bevorzugt sind dabei den lokalen Schnittstellen (d. h. z. B. spezifischen Knöpfen am Endgerät) im Endgerät bereitgestellte Regie-Protokolle zugeordnet, welche die durch die Aktivierung der lokalen Schnittstellen ausgelösten Folgen von Audio-Dateien koordinieren (z. B. ein Knopf für englische Ausgabe der Nachrichten, anderer Knopf für deutsche Ausgabe der Nachrichten, unterschiedliche Typen von Nachrichten wie z. B. Wirtschaft, Sport etc.).

Insbesondere im Zusammenhang mit derartigen Systemen zur spezifischen Ausgabe von Nachrichten kann es sich als vorteilhaft erweisen, zusätzlich zu den Audio-Dateien in analoger Weise Grafik-Dateien zu verwalten, und diese in mit den Audio-Dateien koordinierter Form beim Endgerät auszugeben. So können beispielsweise über einen ebenfalls am Endgerät vorhandenen kleinen Bildschirm in zu den entsprechenden Audio-Dateien koordinierter Weise Bilder oder kleine Filmsequenzen ausgegeben werden. So lassen sich in möglichst effizienter Weise (insbesondere in Bezug auf die Datenübertragung) Nachrichten stets aktualisiert halten.

Weitere bevorzugte Ausführungsformen des erfindungsgemässen Systems sind in den abhängigen Ansprüchen beschrieben.

Des Weiteren betrifft die vorliegende Erfindung die Verwendung eines Systems, wie es oben beschrieben ist, als Warteschleifenzentrale in einem Telefonnetz, zur Erzeugung von Hintergrundmusik insbesondere in Hotels und/oder in Geschäften, zur Verwaltung von Audio-Information respektive Audio-Werbung in Aufzügen, öffentlichen Räumen, Toiletten, und/oder zur gezielten Ausgabe von Nachrichten an speziell dafür vorgesehenen Informations-Posten.

Ausserdem betrifft die vorliegende Erfindung ein Verfahren zur Verwaltung und Ausgabe von Audio-Dateien unter Verwendung eines Systems umfassend wenigstens einen Content Server mit wenigstens einem Prozessor, Mitteln zur Datenspeicherung sowie mit wenigstens einem Netzwerk-Interface, umfassend wenigstens ein Endgerät mit wenigstens einem Prozessor, internen Mitteln zur Datenspeicherung sowie wenigstens einem Netzwerk-Interface, sowie umfassend ein Netzwerk, über welches der wenigstens eine Content Server und das wenigstens eine Endgerät über die jeweiligen Netzwerk-Interfaces in datenmässiger Verbindung stehen. Das Verfahren zeichnet sich dabei dadurch aus, dass auf dem Content Server ein Management-Datenverarbeitungsprogramm vorhanden ist, mit welchem spezifischen Endgeräten spezifische Audio-Dateien bereitgestellt werden, dass das wenigstens eine Endgerät die Audio-Dateien über einen Medienausgang ausgibt, und dass das wenigstens eine Endgerät periodisch und selbstständig auf dem Content Server die spezifisch für das Endgerät bereitgestellten Audio-Dateien über ein TCP/IP Protokoll abholt respektive aktualisiert und entsprechend einem im Endgerät gespeicherten Regie-Protokoll über den Medienausgang ausgibt. Bevorzugt findet das Verfahren unter Verwendung eines Systems, wie es oben beschrieben ist, Anwendung.

Weiterhin betrifft die vorliegende Erfindung ein Management-Datenverarbeitungsprogramm zur Verwendung auf einen Content Server eines Systems, wie es oben beschrieben ist. Mit anderen Worten betrifft es ein Datenverarbeitungsprogramm, welches spezifischen Endgeräten spezifische Audio-Dateien und gegebenenfalls andere Dateien in herunterladbarer Weise zur Verfügung stellt, und welches Datenverarbeitungsprogramm eine Konfiguration und Überwachung der einzelnen Endgeräte insbesondere bevorzugt unter Verwendung eines Web-Browsers erlaubt. Die Software kann dabei als Scriptlösung gestaltet sein, insbesondere in PHP auf einem Standard Webserver. Die Software kann auch als eigenständiges Softwarepaket mit integriertem Webserver aufgesetzt werden, wobei bevorzugt C#, Java oder ähnliche für derartige Anwendungen geeignete Programmiersprachen Anwendung finden können.

Weiterhin betrifft die vorliegende Erfindung ein Endgerät zur Verwendung in einem System, wie es oben beschrieben wurde. Dabei verfügt das Endgerät ausschliesslich über wenigstens einen Prozessor, interne Mittel zur Datenspeicherung sowie wenigstens ein Netzwerk-Interface sowie einen Medienausgang, wobei es sich beim Medienausgang um einen Lautsprecher und/oder Interfaces zur Anbindung von lokalen und/oder oder externen Telefoniesystemen handelt. Die Verwendung derartiger sehr einfach gestalteter Endgeräte ohne weitere Peripheriegeräte wie beispielsweise Laufwerke von Datenträgern, Tastaturen, Drucker etc. gestaltet das vorgeschlagene System besonders einfach. Ausserdem kann so sichergestellt werden, dass Audio-Dateien, welche dem Endgerät zur Verfügung gestellt werden und entsprechend auf diesem zwischengespeichert werden, nicht unter Verletzung von Urheberrechten (Copyright) beim Endgerät ohne weiteres auf Datenträger geschrieben werden können. Da die Endgeräte vorzugsweise ohnehin in einer Weise gebaut respektive programmiert sind, dass sie sich beim Anschluss selber konfigurieren (automatische Vergabe der IP-Adresse sowie automatische selbstständige Aufnahme einer Verbindung mit dem Content Server), sind weitere I/O-Interfaces auch nicht erforderlich.

Bevorzugt können die Endgeräte in "embedded" Technologie mit eingebautem Flashspeicher ausgerüstet werden. Die Endgeräte können eine Speichererweiterung durch handelsübliche Speichermedien wie Compact Flash, Memory Stick, SD oder MMC Card etc. erlauben, und es ist insbesondere möglich, das Speichermedium so zu gestalten, dass es auch auf einem handelsüblichen PC oder Adapter bespielt und bearbeitet werden kann.

### WEGE ZUR AUSFÜHRUNG DER ERFINDUNG

Die Erfindung beschreibt ein System, mit dem die bekannten Techniken zur Übermittlung von Audio-Dateien über das Internet benutzt werden, um in einem weitverzeigten Netzwerk (typisch Firmennetze oder das Internet) die Verteilung von zentral administrierten Dateien an viele, kleine und PC-unabhängige Geräte, die direkt, über Modems, Funknetzwerke oder über Router/Firewall an das Internet angeschlossen sind, schnell und zuverlässig zu erledigen sowie die Übertragung und die Geräte an sich zu überwachen und zu steuern.

Das System besteht aus den Komponenten
a) "Content Server": Es handelt sich hier um ein typischerweise auf einem Webserver aufsetzenden Applikation, die es erlaubt,
   - Benutzer zu autorisieren und Benutzeraktionen zu protokollieren,
   - Dateien jeglicher Art, insbesondere jedoch Musikdateien auf den Server zu legen
   - Aufrufe von angeschlossenen Geräten (c) zu protokollieren
   - Aufrufenden Geräten (c) auf Anforderung Dateien und/oder Kommandos zu übertragen
   - Bei nicht erfolgender Kommunikation von Geräten dies festzustellen und den Status zu vermerken
b) Kommunikationssystem, typischerweise das Internet oder ein Firmen-Intranet (LAN), bestehend aus Kommunikationsstrecken in diversen physikalischen Ausführungsformen (Wireless, Optisch, Kabel, auch segmentweise heterogen), Routern, "Firewalls" etc, wobei auf diesem Netzwerk die Kommunikation über Standardprotokolle (TCP/IP, HTTP, FTP, SMTP, SSL, etc.) von den Geräten zu einem zentralen Webserver ohne Behinderung möglich ist (typischerweise jedoch NICHT die andere Richtung, d.h. der Verbindungsaufbau vom Server zu den Geräten ist typisch durch Firewalls und NAT Router verhindert).
c) Intelligenten Endgeräten, die jedoch in der Regel ohne aufwendige Bedienerinterfaces einfach und zuverlässig aufgebaut sind, mit der Möglichkeit für die geplante Anwendung genügend Speicher (z. B. RAM, nichtflüchtiger Speicher wie z.B. Flashbausteine, Compactflash, Memory Stick, SD Card, MMC Card, Festplatte etc.) für die Musikdatei oder Dateien zur Verfügung zu stellen.

Es ist auch möglich, mehrere Content Server (z.B. Mirrors) zur Verfügung zu stellen, um insbesondere bei Anwesenheit von vielen Endgeräten stets eine optimale Zugänglichkeit gewährleisten zu können.

Die Endgeräte des Systems kommunizieren aktiv via Kommunikationssystem mit dem Content Server, melden sich in definierten Zeitabständen bei diesem Server, um einerseits eine Überwachung des Endgerätes sicherzustellen (Totmannprinzip), andererseits um vom Content Server zu erfahren, ob sich für das Gerät eine Änderung des vom Gerät abgespielten Inhaltes ergibt. Ist dies der Fall, lädt das Gerät die vom Server angegebenen Dateien von einem Internet Fileserver, der typischerweise, jedoch nicht notwendigerweise, der gleiche Server wie der Content Server ist, in den geräteinternen Speicher, bestätigt dann dem Content Server den erfolgten download durch Übermittlung einer Signatur oder einer Versionsnummer, und verarbeitet dann die heruntergeladenen Dateien. Hierbei handelt es sich in der Regel um Audioinhalte, es kann sich jedoch auch um Skripte (Regieanweisungen, Regie-Protokolle), neue Betriebssystemsoftware für das Gerät, eine abgeänderte Konfiguration für das Gerät etc handeln.

Bisher werden in den Bereichen "Music-On-Hold" oder "Background-Music" Systeme angeboten, bei denen entweder der Audioinhalt per CD, Band, Memorychip per Post, Firmentransport oder Kurier verschickt wird, oder die Systeme werden von einem zentralen Computer angerufen und typisch analog bespielt.

Durch die Erfindung wird der Betrieb solcher Musiksysteme wesentlich verbessert und vereinfacht, und neue Anwendungen werden möglich. Dies ergibt sich besonders aus den folgenden Teilen der Erfindung:
a) Fileserver und Webserver sind heutzutage praktisch beliebig skalierbar. Durch den Aufbau der Kommunikation VOM Gerät her können bei richtiger Auslegung des Systems Bandbreitenengpässe vermieden werden.
b) Der Server kann den Geräten verschiedene "Wiederanrufzeiten" vergeben und dadurch die Last verteilen (optimale Ausnutzung der Bandbreite).
c) Die Kommunikation über vorhandene TCP/IP Netzwerke kostet normalerweise keine Verbindungsgebühren und in der Regel auch keine anderen Gebühren.
d) Das "Vergessen" des Einspielens/Einsteckens eines herkömmlichen Mediums (CD, Band etc) ist nicht möglich.
e) Der Betreiber des Systems kann sich jederzeit ein Bild über den Zustand des Gesamtsystems und jedes einzelnen Gerätes machen, d.h. ausgefallene Geräte, die nicht bemerkt werden, gehören der Vergangenheit an.
f) Der Betreiber des Systems kann die Geräte fernsteuern, ausser Betrieb nehmen oder auch wieder in Betrieb setzen.
g) Neuer "Content" kann je nach Einstellung der "Wiederanrufzeiten" innerhalb kürzester Zeit nachprüfbar an alle Geräte verteilt werden.
h) Zeitabhängige Steuerungsanweisungen etc können mit dem gleichen Transportmechanismus genauso wie Softwareupdates verteilt werden.
i) Die verteilten Daten sind IN dem Gerät gespeichert und können nicht auf CDs o.ä. kopiert werden (wie bei PCs so einfach), daraus ergibt sich ein erhöhter urheberrechtlicher Schutz, welcher bei der zur Verfügungstellung auf normale PCs nicht gewährleistet werden kann.
j) Die Geräte installieren sich gewissermassen selbsttätig (automatische respektive autonome Vergabe von IP-Adressen sowie autonome selbstständige erste Kontaktaufnahme mit dem Content Server) sind verschleissfrei, und starten nach einem Stromausfall automatisch auf.
k) Die Geräte können über Schnittstellen lokal gesteuert werden und dann spezifische Audiofiles ausgeben, während der Standardaudiostrom unterbrochen wird, z.B. "Evakuierung" (spezifische Ansteuerung in einem Notfall), "Es ist 19:00, wir schliessen und wünschen Ihnen einen schönen Abend" (spezifische Ansteuerung zu einem bestimmten Zeitpunkt), "2. Stock, Herrenabteilung" (Ansteuerung in einem Lift in Abhängigkeit der Position des Liftes, entsprechende Werbeinformationen können ebenfalls stockwerkspezifisch abgesetzt werden).
l) Je nach Netzwerkverbindung geht das Bespielen der Geräte viel schneller als bei analogen Methoden (CD, Tape, Anruf).
m) Die Geräte können optional mit bereits vorprogrammierten Inhalten geliefert werden und sind dann auch ohne Netzwerkkontakt direkt Betriebsfähig.
n) Durch den Einsatz der Netzwerktechnik kommen die Anfragen am Content Server alle "gleichaussehend" via Netzwerk ein, auch wenn verschiedene Endgeräte über verschiedene Kommunikationsformen (fester Netzwerkanschluss, drahtlos, Modem) an das Netz angeschlossen sind, und können so einheitlich bedient werden.

Auch völlig neue Anwendungen wie z.B. eine "Nachrichtenbox" oder "Wetterbox", die laufend aktualisierte Nachrichten vorhält OHNE dass diese gestreamt werden müssen, sind möglich und können gegebenenfalls durch Einspielung von visuellen Daten unterstützt werden. Denkbar sind zum Beispiel Nachrichtenstationen in Bahnhöfen, bei welchen auf Knopfdruck spezifische aktuelle Informationen abgefragt werden können.

Die vorgeschlagene vereinfachte Aktualisierung von Audio-Dateien auf einem Endgerät kann ausserdem vorteilhaft im Zusammenhang mit Telefonzentralen genutzt werden. Entsprechend können Endgeräte zusätzlich zu Netzwerk-Interface mit einem Interface zum Anschluss des externen Telefonnetzes versehen werden und mit einem Anschluss für ein lokales Telefon oder ein lokales Telefonnetzwerk. Ein Kunde, welcher ein derartiges Endgerät zusammen mit der Dienstleistung der Verwaltung und Aktualisierung von Warteschleifen-Texten und Warteschleifen-Music erwirbt, kann dieses Endgerät beziehen, es an einen Netzwerkanschluss, an einen Stromanschluss sowie in die Leitung von externen Telefonsystem zum lokalen Telefonsystem schalten. Das Endgerät konfiguriert sich anschliessend selbstständig (z. B. automatische Vergabe einer IP-Adresse durch DHCP eines Netzwerk-Servers, oder autonome selbstständige Definition einer IP-Adresse durch das Endgerät analog AutoIP) und nimmt selbstständig einen ersten Kontakt mit einem Content Server auf (erstes Anmelden). Entweder bezieht der Kunde eine Standarddienstleistung wie z. B. Warteschleifenmusik bei besetzter Leitung, dann sind kundenseitig keine weiteren Konfigurationsschritte mehr erforderlich, da auf dem Content Server die entsprechende Information im Zusammenhang mit der Seriennummer des Gerätes bereits in spezifischer Weise aufgeschaltet ist Alternativ ist es möglich, dass der Kunde den Gegenstand der Warteschleife in veränderbarer Weise zur Verfügung gestellt erhält. Entsprechend kann der Kunde sein Gerät über einen Web-Browser auf dem Content Server konfigurieren (z. B. eine Durchsage auslesen, dass im Moment das Büro geschlossen ist und keine Telefone angenommen werden können). Diese Konfiguration kann auch über andere Protokolle wie z. B. SMTP, ftp etc. erfolgen. Diese zentrale Verwaltung erleichtert den Unterhalt und die Aktualisierung von derartigen Systemen erheblich, und die Tatsache, dass die Audio-Dateien zusätzlich lokal auf dem Endgerät abgelegt sind, verhindert, dass bei einem temporären Ausfall des Netzwerks das Warteschleifen-System unmittelbar ausser Betrieb gesetzt wird.

Weitere Anwendungen sind zum Beispiel im Zusammenhang mit an den Endgeräten vorgesehenen Schnittstellen, an welchen Sensoren angebracht sind, denkbar. So können z. B. Audio-Inhalte in Abhängigkeit der tatsächlichen Anwesenheit von Personen abgespielt werden, so z. B. Werbung in Umkleidekabinen oder Toilettenkabinen etc.

So ergeben sich zusammenfassend folgende Vorteile respektive Grundideen:
Einsatz von Standardnetzwerken zur
   - Kostenreduktion (keine Einwählgebühren),
   - Erhöhung der Zuverlässigkeit (alle Geräte werden aktualisiert und geben feedback)
   - Online-Systemüberwachung und Steuerung
   - Verteilung der aktuellen Zeit an die Geräte zur Zeitsteuerung (Gerät muss nie eingestellt werden)
   - Durch "Endgerät kontaktiert Zentrale" Idee kommt man durch die üblichen Firewalls etc. in der Regel durch
   - Downloadfähige Skripten (Regie-Protokolle) (z. B. spiele das von 8-12, dann was anderes von 12-1, dann dies bis 4 und unterbreche alles immer alle 30 Sekunden mit "xxx")
   - Einsatz einer "embedded" Architektur um die typischen PC Probleme (vom hohen Stromverbrauch über unsichere Speicherung der Daten, Hackerprobleme, mechanischer Verschleiss bis Management) auszuschalten.
   - Einsatz von herkömmlichen, verschleissfreien und günstigen Speichermedien im Gerät wie z.B. interner Flash Speicher Compact Flash, SD Cards etc

## Patentansprüche

1. System umfassend
wenigstens einen Content Server mit wenigstens einem Prozessor, Mitteln zur Datenspeicherung sowie mit wenigstens einem Netzwerk-Interface,
wenigstens ein Endgerät mit wenigstens einem Prozessor, internen Mitteln zur Datenspeicherung sowie wenigstens einem Netzwerk-Interface, sowie ein Netzwerk, über welches der wenigstens eine Content Server und das wenigstens eine Endgerät über die jeweiligen Netzwerk-Interfaces in datenmässiger Verbindung stehen,
**dadurch gekennzeichnet, dass**
auf dem Content Server ein Management-Datenverarbeitungsprogramm vorhanden ist, welches spezifischen Endgeräten spezifische Audio-Dateien bereitstellt, dass
das wenigstens eine Endgerät über einen Medienausgang zur Ausgabe von Audio-Dateien verfügt, und dass
das wenigstens eine Endgerät periodisch und selbstständig auf dem Content Server die spezifisch für das Endgerät bereitgestellten Audio-Dateien über ein TCP/IP Protokoll abholt respektive aktualisiert und entsprechend einem im Endgerät gespeicherten Regie-Protokoll, welches im Endgerät die Ausgabe respektive Wiedergabe der Audiodateien in Bezug auf Ablauf und/oder Zeit steuert, insbesondere bevorzugt kontinuierlich und ggf. repetitiv oder einmalig, über den Medienausgang ausgibt, wobei die Endgeräte ausserdem periodisch und selbstständig auf dem Content Server spezifisch für das jeweilige Endgerät bereitgestellte Regie-Protokolle und die aktuelle Zeit abholen respektive aktualisieren.

2. System nach Anspruch 1, **dadurch gekennzeichnet, dass** es sich beim Netzwerk und/oder beim Netzwerkanschluss um verdrahtete oder Funk-Netzwerktechnik handelt.

3. System nach einem der vorhergehenden Ansprüche, **dadurch gekennzeichnet, dass** der Netzwerkanschluss über Modem (Festleitung oder Dialup) realisiert ist.

4. System nach einem der vorhergehenden Ansprüche, **dadurch gekennzeichnet, dass** das Endgerät zum Aufbau der Netzwerkverbindung selbstständig einen Point of Presence(POP) via Modem anwählt

5. System nach einem der vorhergehenden Ansprüche, **dadurch gekennzeichnet, dass** die Übertragung der Daten via HTTP, FTP, SSL, TLS, oder SMTP-Protokolle stattfindet.

6. System nach einem der vorhergehenden Ansprüche, **dadurch gekennzeichnet, dass** die Übertragung der Daten via http stattfindet, und dass weiterhin Protokolle zur Kommunikation mit Proxy Servern resp. zur Übermittlung von Daten über Proxy Server von und zum Content Server unterstützt respektive konfiguriert werden können.

7. System nach einem der vorhergehenden Ansprüche, **dadurch gekennzeichnet, dass** das wenigstens eine Endgerät als Medienausgang über einen Lautsprecher und/oder über eine Kopfhörerbuchse und/oder über einen oder mehrere Anschlüsse zur Anbindung von lokalen Telefonen und/oder einer lokalen Telefonanlage verfügt, wobei bei Vorhandensein eines derartigen telefonischen Anschlusses gleichzeitig zusätzlich wenigstens ein Interface zum Anschluss der externen Telefonleitung vorhanden ist.

8. System nach Anspruch 7, **dadurch gekennzeichnet, dass** das Endgerät dazu ausgelegt ist, über die externe Telefonleitung eingehende Anrufe in eine insbesondere bevorzugt in Abhängigkeit des Zustands der lokalen Telefonanlage respektive der lokalen Telefone und/oder in Abhängigkeit einer gezielten Eingabe gestaltete Warteschleife eintreten zu lassen, und dabei wenigstens eine Audio-Datei entsprechend einem Regie-Protokoll in ggf. interaktiver Weise abzuspielen.

9. System nach einem der vorhergehenden Ansprüche, **dadurch gekennzeichnet, dass** die Endgeräte nach komplettem Herunterladen von Audio-Dateien respektive von Regie-Protokollen eine Signatur, Version oder Prüfsumme als Bestätigung an den Content Server übertragen.

10. System nach einem der vorhergehenden Ansprüche, **dadurch gekennzeichnet, dass** die von den Endgeräten erfolgten respektive übermittelten Zugriffe und/oder Transaktionen und/oder Signaturen und/oder Versionen und/oder Prüfsummen auf dem Content Server im Management-Datenverarbeitungsprogramm aufgezeichnet werden, und dass auf dem Content Server der Systemzustand des Gesamtsystems oder einzelner Endgeräte insbesondere bevorzugt unter Verwendung eines Web-Browsers abgefragt werden kann.

11. System nach einem der vorhergehenden Ansprüche, **dadurch gekennzeichnet, dass** die Anfragen der Endgeräte beim Content Server durch Vergabe von gestaffelten Anfragezeiten vorzugsweise im wesentlichen gleichmässig verteilt werden.

12. System nach einem der vorhergehenden Ansprüche, **dadurch gekennzeichnet, dass** die einzelnen Endgeräte und/oder der Content Server über einen Web-Browser konfiguriert und in Bezug auf deren Status überprüft werden können.

13. System nach einem der vorhergehenden Ansprüche, **dadurch gekennzeichnet, dass** die Endgeräte auch zum direkten Streamen der Audio-Dateien vom Content Server in der Lage sind.

14. System nach einem der vorhergehenden Ansprüche, **dadurch gekennzeichnet, dass** die Endgeräte zusätzlich über wenigstens eine lokale Schnittstelle verfügen, über welche die Ausgabe von bestimmten Audio-Dateien oder Kombinationen von Audio-Dateien, insbesondere in Form von Nachrichten und/oder MusikDateien, ausgelöst werden kann, wobei insbesondere bevorzugt den lokalen Schnittstellen im Endgerät bereitgestellte Regie-Protokolle zugeordnet sind, welche die durch die Aktivierung der lokalen Schnittstellen ausgelösten Folgen von Audio-Dateien koordinieren.

15. System nach einem der vorhergehenden Ansprüche, **dadurch gekennzeichnet, dass** die Endgeräte in "embedded" Technologie mit eingebautem Flashspeicher ausgerüstet sind.

16. System nach einem der vorhergehenden Ansprüche, **dadurch gekennzeichnet, dass** die Endgeräte eine Speichererweiterung durch handelsübliche Speichermedien wie Compact Flash, Memory Stick, SD oder MMC Card etc erlauben.

17. System nach einem Anspruch 16, **dadurch gekennzeichnet, dass** das Speichermedium auch auf einem handelsüblichen PC oder Adapter bespielt und bearbeitet werden kann.

18. System nach einem der vorhergehenden Ansprüche, **dadurch gekennzeichnet, dass** zusätzlich zu den Audio-Dateien in analoger Weise Grafik-Dateien verwaltet werden, und diese in mit den Audio-Dateien koordinierter Form beim Endgerät ausgegeben werden.

19. System nach einem der vorhergehenden Ansprüche, **dadurch gekennzeichnet, dass** das Management-Datenverarbeitungsprogramm auf dem Content Server als Scriptlösung insbesondere bevorzugt in PHP auf einem Standard Webserver programmiert ist.

20. System nach einem der Ansprüche 1 bis 19, **dadurch gekennzeichnet, dass** das Management-Datenverarbeitungsprogramm auf dem Content Server als eigenständiges Softwarepaket mit integriertem Webserver in C#, Java oder einer anderen üblichem Programmiersprache codiert ist.

21. Verwendung eines Systems nach einem der vorhergehenden Ansprüche als Warteschleifenzentrale in einem Telefonnetz, zur Erzeugung von Hintergrundmusik insbesondere in Hotels und/oder in Geschäften, zur Verwaltung von Audio-Information respektive Audio-Werbung in Aufzügen, öffentlichen Räumen, Toiletten, und/oder zur gezielten Ausgabe von Nachrichten an speziell dafür vorgesehenen Informations-Posten.

22. Verfahren zur Verwaltung und Ausgabe von Audio-Dateien unter Verwendung
eines Systems umfassend
wenigstens einen Content Server mit wenigstens einem Prozessor, Mitteln zur Datenspeicherung sowie mit wenigstens einem Netzwerk-Interface,
wenigstens ein Endgerät mit wenigstens einem Prozessor, internen Mitteln zur Datenspeicherung sowie wenigstens einem Netzwerk-Interface, sowie
ein Netzwerk, über welches der wenigstens eine Content Server und das wenigstens eine Endgerät über die jeweiligen Netzwerk-Interfaces in datenmässiger Verbindung stehen,
**dadurch gekennzeichnet, dass**
auf dem Content Server ein Management-Datenverarbeitungsprogramm vorhanden ist, mit welchem spezifischen Endgeräten spezifische Audio-Dateien bereitgestellt werden, dass
das wenigstens eine Endgerät die Audio-Dateien über einen Medienausgang ausgibt, und dass
das wenigstens eine Endgerät periodisch und selbstständig auf dem Content Server die spezifisch für das Endgerät bereitgestellten Audio-Dateien über ein TCP/IP Protokoll abholt respektive aktualisiert und entsprechend einem im Endgerät gespeicherten Regie-Protokoll, welches im Endgerät die Ausgabe respektive Wiedergabe der Audiodateien in Bezug auf Ablauf und/oder Zeit steuert, über den Medienausgang ausgibt, wobei die Endgerät ausserdem periodisch und selbstständig auf dem Content Server spezifisch für das jeweilige Endgerät bereitgestellte Regie-Protokolle und die aktuelle Zeit abholen respektive aktualisieren, und wobei insbesondere bevorzugt ein System nach einem der Ansprüche 1 bis 22 verwendet wird.

23. Management-Datenverarbeitungsprogramm zur Verwendung auf einen Content Server eines Systems gemäss einem der Ansprüche 1 bis 20 respektive zur Verwendung in einem Verfahren nach Anspruch 22.

## Claims

1. A system comprising
at least one content server including at least one processor, means for storing data, and at least one network interface,
at least one terminal device including at least one processor, means for storing data, and at least one network interface;
one network, by which the at least one content server and the at least one terminal device are in data connection by their respective network interfaces,
**characterized in that**
a management data processing program configured to make specific audio files available to specific terminal devices is included on the content server,
the at least one terminal device includes a media output channel for output of audio files,
the at least one terminal device periodically and self-dependently fetches, or respectively updates, the audio files from the content server made available specifically for the terminal device using a TCP/IP protocol, and outputs the audio files depending on a direction protocol that controls the output or reproduction of the audio files with respect to sequence and/or time and that is saved in the terminal device, continuously, or in repetition, or only once, using the media output channel,
wherein the terminal devices further periodically and self-dependently fetch, or respectively update, direction protocols made available on the content server specifically for each corresponding terminal device and current time.

2. The system according to claim 1, **characterized in that** the network and/or the network connection includes wire technology or wireless technology.

3. The system according to one of the preceding claims, **characterized in that** the network connection is made through a modem (fixed line or dial-up).

4. The system according to one of the preceding claims, **characterized in that** the terminal device independently dials a point of presence (POP) via the modem for establishing a network connection.

5. The system according to one of the preceding claims, **characterized in that** the transmission of the data takes place via HTTP, FTP, SSL, TLS, or SMTP protocols.

6. The system according to one of the preceding claims, **characterized in that** the transmission of the data takes place via HTTP, and that further protocols for the communication with proxy servers, respectively for the transmission of data via proxy server, from and to the content server can be supported, respectively configured.

7. The system according to one of the preceding claims, **characterized in that** the at least one terminal device is provided with, as a media output channel, a loudspeaker and/or a head phone jack, and/or one or more connectors for connection of local telephones and/or a local telephone system, wherein in the case of such a telephone connector at least one interface for connection to an external telephone line is provided.

8. The system according to claim 7, **characterized in that** the terminal device is configured to receive incoming calls via the external telephone line and to put the received calls into an on hold loop, which is structured in function of a state of a local telephone system or of local telephones and/or depending on specific input, and to thereby plays at least one audio file in accordance with a direction protocol if need be in an interactive manner

9. The system according to one of the preceding claims, **characterized in that** the terminal devices transfer a signature, version, or check sum as a confirmation to the content server after complete download of audio files, respectively of direction protocols.

10. The system according to one of the preceding claims, **characterized in that** the accesses and/or the transactions and/or the signatures and/or the versions and/or the check sums that have taken place, respectively were transmitted by the terminal devices are logged on the content server in the management data processing program, and that the state of the whole system or of individual terminal devices can be checked on the content server by using a web browser.

11. The system according to one of the preceding claims, **characterized in that** the requests of the terminal devices on the content server are substantially equally distributed by attribution of staged request times.

12. The system according to one of the preceding claims, **characterized in that** the individual terminal devices and/or the content server can be configured by a web browser and can be checked in respect of their status by the web browser.

13. The system according to one of the preceding claims, **characterized in that** the terminal devices are further configured for direct streaming of audio files from the content server.

14. The system according to one of the preceding claims, **characterized in that** the terminal devices further include at least one local interface, by which an output of specific audio files or a combination of audio files, in particular in a form of messages and/or music files, can be triggered, wherein in particular preferably direction protocols made available in the terminal device are attributed to the local interfaces, which coordinate the sequence of audio files upon activation of the local interfaces.

15. The system according to one of the preceding claims, **characterized in that** the terminal devices are equipped with embedded technology with internal flash memory.

16. The system according to one of the preceding claims, **characterized in that** the terminal devices are provided with a memory extension by commercially available memory media of at least one of compact flash, memory stick, SD card, or MMC card.

17. The system according to claims 16, **characterized in that** the memory medium is configured to be recorded and modified on a commercially available PC or adapter.

18. The system according to one of the preceding claims, **characterized in that** in addition to the audio files, graphic files are managed analogously, and are outputted at the terminal device with the audio files in a coordinated manner.

19. The system according to one of the preceding claims, **characterized in that** the management data processing program is programmed on the content server as a script solution.

20. The system according to one of the claims 1-19, **characterized in that** the management data processing program is coded as an independent software package on the content server with integrated web server in C#, Java, or in another programming language.

21. Use of a system according to one of the preceding claims, as an on hold centre in a telephone network, for generation of background music, in particular in Hotels and/or businesses, for management of audio information, respectively of audio advertisement, in elevators, public spaces, toilets, and/or for specific output of messages on specifically provided for information posts.

22. A process for management and output of audio files by use of a system comprising
at least one content server including at least one processor, means for storing data, and at least one network interface;
at least one terminal device including least one processor, means for storing data, and at least one network interface;
a network, by which the at least one content server and the at least one terminal device are in data connection by their respective network interfaces;
**characterized in that** the content server further includes a management data processing program, by which specific audio files are made available to specific terminal devices;
the at least one terminal device outputs the audio files by a media output channel, and that
the least one terminal device periodically and self-dependently fetches, respectively updates, the audio files as specifically made available on the content server for the specific terminal device through a TCP/IP protocol, and outputs the audio files depending on a direction protocol that controls the output, respectively the reproduction, of the audio files with respect to sequence and/or time, wherein the terminal devices further periodically and self-dependently fetch, respectively update, direction protocols made available on the content server specifically for each corresponding terminal device and current time, and wherein in particular preferably a system according to one of the claims 1 to 22 is used.

23. A management data processing program for use on a content server of a system according to one of the claims 1 to 20, respectively for use in a process according to claim 22.

## Revendications

1. Système comprenant
au moins un serveur de contenu possédant au moins un processeur, des moyens de stockage de données et au moins une interface de réseau,
au moins un terminal possédant au moins un processeur, des moyens internes de stockage de données et au moins une interface de réseau et
un réseau par l'intermédiaire duquel l'au moins un serveur de contenu et l'au moins un terminal se trouvent en liaison de données à travers les interfaces de réseau respectifs,
**caractérisé en ce**
**que** un programme de traitement et de gestion de données est présent sur le serveur de contenu lequel met des fichiers audio à la disposition de terminaux spécifiques,
**que** l'au moins un terminal dispose d'une sortie de médias destinée à la production de fichiers audio, et
**que** l'au moins un terminal extrait, respectivement met à jour, de manière périodique et autonome, sur le serveur de contenu, les fichiers spécifiquement mis à disposition du terminal à travers un protocole TCP/IP, et produit lesdits fichiers à travers la sortie de médias selon une protocole de commande mis en mémoire dans le terminal, qui dans le terminal commande la production, respectivement la reproduction, par rapport au temps et/ou à la suite, en particulier préférablement de manière continue et, le cas échéant, répétitive ou unique,
où d'avantage les terminaux récupèrent, respectivement mettent à jour, de manière périodique et autonome, le temps actuel et des protocoles de commande mis à disposition de manière spécifique sur le serveur de contenu pour le terminal correspondant.

2. Système selon la revendication 1, **caractérisé en ce que**, en ce qui concerne le réseau et la connexion réseau, il s'agit de technologie de réseau câblé ou sans fil.

3. Système selon une des revendications précédentes, **caractérisé en ce que** la connexion au réseau est réalisée à travers un modem (ligne fixe ou «dialup ».

4. Système selon une des revendications précédentes, **caractérisé en ce que** le terminal s'adresse de manière autonome à un «point of presence (POP) pour l'établissement d'une connexion réseau » à travers un modem.

5. Système selon une des revendications précédentes, **caractérisé en ce que** le transfert des données a lieu par l'intermédiaire de protocole HTTP, FTP, SSL, TLS ou SMTP.

6. Système selon une des revendications précédentes, **caractérisé en ce que**, le transfert des données a lieu par l'intermédiaire de HTTP, et que d'avantage des protocoles pour la communication avec les serveurs proxy, respectivement pour la transmission de données à travers de serveurs proxy, depuis et vers le serveur de contenu peuvent être supportés, respectivement configurés.

7. Système selon une des revendications précédentes, **caractérisé en ce que** l'au moins un terminal dispose d'un hautparleur et/ou d'une prise de casque et/ou d'un ou plusieurs connexions pour relier un téléphone local et/ou une installation de téléphone comme sortie de médias, où lors de l'existence de telle sorte de connexion téléphonique, au moins un interface pour la connexion de la ligne externe téléphonique est d'avantage simultanément présent.

8. Système selon la revendication 7, **caractérisé en ce que** le terminal est adapté pour laisser entrer des appels entrants à travers la ligne externe téléphonique dans une ligne d'attente, en particulier préférablement en dépendance de l'état de l'installation téléphonique locale, respectivement des téléphones locaux, et/ou en dépendance d'une entrée ciblée, et de reproduire au moins un fichier audio conforme à un protocole de commande, le cas échéant de manière interactive.

9. Système selon une des revendications précédentes, **caractérisé en ce que** les terminaux transmettent une signature numérique, version ou somme de contrôle comme confirmation au serveur de contenu après le téléchargement complet des fichiers audio, respectivement des protocoles de commande.

10. Système selon une des revendications précédentes, **caractérisé en ce que** les accès et/ou transactions et/ou signatures numériques et/ou versions et/ou somme de contrôle entrepris, respectivement transmis par les terminaux sont enregistrés sur le serveur de contenu dans le programme de traitement et de gestion de données, et que l'état du système entier, ou des terminaux individuels peut être demandé sur le serveur de contenu, préférablement avec l'utilisation d'un navigateur web.

11. Système selon une des revendications précédentes, **caractérisé en ce que** les demandes des terminaux auprès du serveur de contenu sont distribuées préférablement de manière essentiellement uniforme par attribution de temps de requête décalée.

12. Système selon une des revendications précédentes, **caractérisé en ce que** les terminaux individuels et/ou serveurs de contenu peuvent être configurés à travers un navigateur web et peuvent être contrôlés par rapport à leur statut.

13. Système selon une des revendications précédentes, **caractérisé en ce que** les terminaux sont aussi capables de diffuser en continu les fichiers audio directement depuis le serveur de contenu.

14. Système selon une des revendications précédentes, **caractérisé en ce que** les terminaux disposent d'avantage d'au moins un interface local, à travers duquel la production de fichiers audio définis, ou de combinaisons de fichiers audio, peuvent être déclenchés, en particulier en forme d'informations et/ou fichiers de musique, où en particulier préférablement des protocoles de commande mis à disposition dans le terminal sont attribués aux terminaux locaux, qui coordonnent les séquences de fichier audio produites par l'activation des interfaces locaux.

15. Système selon une des revendications précédentes, **caractérisé en ce que** les terminaux sont équipés de technologie «embedded » ayant de la mémoire flash.

16. Système selon une des revendications précédentes, **caractérisé en ce que** les terminaux permettent un élargissement de la mémoire à travers de médias de stockage courants comme compact flash, memory stick, carte SD ou MMC, etc..

17. Système selon une des revendications précédentes, **caractérisé en ce que** le médium de stockage peut être enregistré et édité aussi sur un PC courant ou adaptateur.

18. Système selon une des revendications précédentes, **caractérisé en ce que** de manière additionnelle aux fichiers audio, des fichiers graphiques sont gérés de manière analogue, et que ceux-ci sont produits par le terminal de manière coordonné avec les fichiers audio.

19. Système selon une des revendications précédentes, **caractérisé en ce que** le programme de traitement et de gestion de données est programmé comme solution script en particulier préférablement en PHP sur un serveur web standard.

20. Système selon une des revendications 1 à 19, **caractérisé en ce que** le programme de traitement et de gestion de donner est codé en tant que logiciel indépendant ayant un serveur web intégré en C#, Java ou un autre langage de programmation courant.

21. Utilisation d'un système selon une des revendications précédentes comme centrale de ligne d'attente dans un réseau téléphonique, pour la génération de musique de fond, en particulier dans des hôtels et/ou des commerces, pour la gestion d'information audio, respectivement publicité audio, dans des ascenseurs, espaces publiques, toilettes, et/ou pour la production ciblée d'information sur des postes d'information spécialement conçus pour cela.

22. Procédé pour la gestion et production de fichiers audio, en utilisant un système comprenant
au moins un serveur de contenu possédant au moins un processeur, des moyens de stockage de données ainsi qu'au moins un interface de réseau,
au moins un terminal possédant au moins un processeur, des moyens internes de stockage de données et ainsi qu'au moins un interface de réseau,
et un réseau par l'intermédiaire duquel l'au moins un serveur de contenu et l'au moins un terminal se trouvent en liaison de donner à travers les interfaces de réseau respective,
**caractérisé en ce**
**que** un programme de traitement et de gestion de données est présent sur le serveur de contenu qui met des fichiers audio à disposition de terminaux spécifiques, et
**que** l'au moins un terminal produit des fichiers audio à travers une sortie de médias et
**que** au moins un terminal extrait, respectivement met à jour, de manière périodique et autonome, sur le serveur de contenu, les fichiers spécifiquement mis à disposition du terminal à travers un protocole TCP/IP et produit lesdits fichiers à travers une sortie média selon un protocole de commande mis en mémoire dans le terminal, qui dans le terminal commande la production, respectivement la reproduction par rapport au temps et/ou de la suite, où les terminaux d'avantage récupèrent, respectivement mettent à jour, de matière périodique et autonome, le temps actuel et des protocoles de commande mis à disposition de manière spécifique sur le serveur de contenu pour le terminal correspondant, et que en particulier préférablement un système selon une des revendications 1 à 22 est utilisé.

23. Programme de traitement et de gestion de données pour utilisation sur un serveur de contenu d'un système selon une des revendications 1 à 20, respectivement pour l'utilisation dans un procédé selon la revendication 22.
